(19) Europäisches Patentamt
European Patent Office
Office européen des brevets

(11) **EP 3 010 982 B1**

(12) **EUROPEAN PATENT SPECIFICATION**

(45) Date of publication and mention
of the grant of the patent:
**07.08.2024 Bulletin 2024/32**

(21) Application number: **14814107.0**

(22) Date of filing: **11.06.2014**

(51) International Patent Classification (IPC):
**C09C 3/08** *(2006.01)*          **C09C 1/36** *(2006.01)*
**C09C 3/10** *(2006.01)*          **D21H 25/14** *(2006.01)*
**D21H 19/38** *(2006.01)*

(52) Cooperative Patent Classification (CPC):
**D21H 19/385; C09C 1/3676; C09C 3/10;**
**D21H 25/14;** C01P 2004/03; C01P 2004/04;
C01P 2006/10; C01P 2006/40; C01P 2006/60;
C01P 2006/62; C01P 2006/63; C01P 2006/64

(86) International application number:
**PCT/US2014/041945**

(87) International publication number:
**WO 2014/204754 (24.12.2014 Gazette 2014/52)**

(54) **COMPOSITION COMPRISING ENCAPSULATED SOLID PARTICLES AND USE THEREOF FOR COATING PAPER**

ZUSAMMENSETZUNG MIT EINGEKAPSELTEN FESTSTOFFTEILCHEN UND IHRE VERWENDUNG ZUR BESCHICHTUNG VON PAPIER

COMPOSITION COMPRENANT DES PARTICULES SOLIDES ENCAPSULÉES ET SON UTILISATION POUR UN REVÊTEMENT DE PAPIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2013 US 201361836017 P**

(43) Date of publication of application:
**27.04.2016 Bulletin 2016/17**

(73) Proprietor: **Encapsys, LLC**
**Appleton, WI 54915 (US)**

(72) Inventors:
• **NIANXI, Yan**
**Appleton, WI 54911 (US)**

• **JOHN, Charles, Debraal**
**Appleton, WI 54913 (US)**

(74) Representative: **Carpmaels & Ransford LLP**
**One Southampton Row**
**London WC1B 5HA (GB)**

(56) References cited:
**EP-A1- 2 161 304          EP-A1- 2 343 344**
**EP-B1- 2 161 304          WO-A1-2009/074651**
**WO-A1-93/12183           WO-A2-2006/008657**
**SU-A1- 1 281 576          US-A- 4 981 882**
**US-A- 6 080 802           US-A1- 2008 210 394**
**US-B1- 6 406 747          US-B2- 7 193 008**

**Description**

**FIELD OF DISCLOSURE**

The present invention relates to particle compositions of encapsulated solid particles and processes for making such particle compositions, and in particular to a particle composition including encapsulated titanium dioxide which is coated with a polymer and processes for producing this particle composition.

**BACKGROUND**

Encapsulated particulate materials are of interest because of their use in many fields. For example, encapsulated particles can be used in coatings, paints, paper, plastic materials, cosmetics, and in numerous other products. The properties of encapsulated particles allow for many beneficial results, such as an increase in the opacity of a material, an increase in the dispersion of the particles, a reduction in the agglomeration of the particles, an improvement of the particles' compatibility with the dispersing medium, and an improvement in the light stability of the particles.

In view of the many uses for encapsulated particles in many diverse fields, improvements in the properties of these particles that will magnify the desired effects of these properties are of great value. Further, improvements in these properties can allow for more efficient use of materials, for instance, in a coating.

Thus, it is desirable to provide an encapsulated particle with improved opacity and brightness properties, which would allow for a reduction in the amount of particulate material used in a particular application, such as in a coating.

It is further desirable to provide an encapsulated particle which is capable of forming a brighter and more stable suspension when formed in a slurry material.

WO 93/12183 A1 discloses inorganic material particles such as titanium dioxide (10) pigment particles (12) which are dispersed in an aqueous medium with a polyelectrolyte pigment dispersant (20).

EP 2 161 304 A1 discloses an opacifying pigment encapsulated in polymer including a pigment particle having an average particle diameter of from 0.005 to 5 microns and an index of refraction of at least 1.8; an aminophosphorus acid-functional first polymer having been used to disperse the pigment particle in an aqueous medium; and a second polymer that at least partially encapsulates the dispersed pigment particle is provided and a process for forming the opacifying pigment encapsulated in polymer and compositions including the particles.

EP 2343344 A1 discloses a process for preparing a polymer latex comprising encapsulated pigment particles, said process comprising the steps of: a) Providing a first dispersion comprising water, at least one surfactant and at least one particulate, inorganic pigment of which the particles have a mean diameter of from 200 nm to 10 $\mu$m; b) Providing a second dispersion comprising water, a dispersant, a hydrophobe and at least two polymerizable monomers, of which monomers at least one is an acrylic monomer; c) Independently homogenizing the first and / or second dispersions; d) Mixing said first and second dispersions and homogenizing said mixture until the particles of pigment are encapsulated by monomer droplets; and e) Initiating polymerization of the monomers.

US 6080802 A discloses a process wherein titanium dioxide particles are dispersed in an aqueous medium with a polymeric latex which adsorbs to the surface of the titanium dioxide to give a low-viscosity slurry or pigment grind of composite titanium dioxide-polymeric latex particles. US 4981882 A discloses a process wherein aqueous dispersions of particles stabilized by a basic dispersant are rendered suitable for particle encapsulation or coating processes by polymerization from the aqueous phase by treatment with certain ethylenically-unsaturated carboxylic acids.

**SUMMARY**

Exemplary embodiments of the invention are directed to a particle composition according to the appended claims comprising one or more particles comprising a pigment material and a polymeric coating layer at least partially surrounding the pigment particle; and stanchions for particle to particle bridging extending from the coating layer.

Further exemplary embodiments of the invention are directed to a particle composition according to the appended claims comprising one or more particles comprising a pigment material and a polymeric coating layer at least partially surrounding the pigment particle; and stanchions for particle to particle bridging extending from the coating layer which further comprises discrete particle separators between the particles of pigment material.

The above as well as additional objectives, features, and advantages of the present invention are detailed in the description below, as well as in the drawings.

**BRIEF DESCRIPTION OF THE DRAWINGS**

The accompanying drawings are presented to aid in the description of embodiments of the invention and are provided solely for illustration of the embodiments and not limitation thereof.

Figs. 1 and 2 are drawings of a particle composition consistent with the present invention.

Figs. 3-13 are TEM (Transmission Electron Microscope) photographs of a particle composition consistent with the present invention.

Fig. 14 is a SEM (Scanning Electron Microscope) photograph showing polymer coating details of a particle composition consistent with the present invention.

## DETAILED DESCRIPTION

Aspects of the invention are disclosed in the following description and related drawings directed to specific embodiments of the invention.

The word "exemplary" is used herein to mean "serving as an example, instance, or illustration." Any embodiment described herein as "exemplary" is not necessarily to be construed as preferred or advantageous over other embodiments. Likewise, the term "embodiments of the invention" does not require that all embodiments of the invention include the discussed feature, advantage or mode of operation.

The terminology used herein is for the purpose of describing particular embodiments only and is not intended to be limiting of embodiments of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

The encapsulated particle composition of the present invention is defined in the appended claims and is comprised of one or more pigment particles, such as $TiO_2$. These particles comprise a pigment material and a polymeric coating layer at least partially surrounding the pigment particle and stanchions for particle to particle bridging extending from the coating layer.

The particles can be solid particles, and additionally can be any particles that are substantially insoluble in water. The particles are be made of titanium dioxide, carbon black, mica, silica, calcium carbonate, barium sulfate, zinc oxide, lead oxide, zinc sulfate, iron oxide, talc, clays, kaolinite, montmorillonite, smectite, illite, and chlorite.

Titanium dioxide can come in a variety of forms including rutile, anatase, brookite, or amorphous. Rutile and anatase can be photocatalytic. $TiO_2$ can be surface treated with materials such as aluminum oxide, silicon dioxide, tetra ethoxysilane, or zinc oxide. Such surface treatments can be applied to increase dispersibility or uv absorption, or to alter photocatalytic properties. The major uses for $TiO_2$ are for increasing whiteness, brightness or opacity in various applications. Treated $TiO_2$ or untreated $TiO_2$ were each effective in the process and composition of the invention.

In the present invention, the stanchions are made of a polymeric material, and the polymeric coating of the particle composition can be selected based upon the proposed use of the particle composition. Further, the polymeric material making up the polymeric coating layer of the particles is the same as the polymeric material that makes up the stanchions. The polymeric material is an addition polymerizable polymer selected from alkyl (meth)acrylate, or is selected from the group of emulsion polymers consisting of melamine formaldehyde, urea formaldehyde, alkyl (meth)acrylate, styrene, isocyanate and a polyol.

Although not intending to be bound by any particular theory, the stanchioning between particles is believed to be either a function of or attributable to particular mixing speed ranges and/or composition formulation and quantities in the slurry during the encapsulation process.

The core based on weight, and as a percent of core compared to the total of core plus wall material, can range from 0.1% to about 80%; or even from 2% to about 80%; or even from 0.5% to 60%; or even from 2% to 60%, or even from 10% to 60%, or even from 20% to 60%.

Further, the polymeric coating encapsulating the solid particles can comprise a material selected from a gellable colloid, carboxy methyl cellulose, gelatin, gelatin-gum arabic, melamine formaldehyde, methylol melamine, urea formaldehyde, dimethylol urea, methylated dimethylol urea, methylated melamine formaldehyde, methylated methylol melamine, a gelatin-anionic polymer, alkyl acrylate, alkyl methacrylate, alkylacrylate-acrylic acid copolymer, or a reaction product with any of the foregoing. Individual alkyl groups preferably can range from about C1 to C24. Preferred polymeric material useful for the polymeric coating encapsulating the solid particles includes polyacrylate, polymethacrylate, polyalkyl(meth)acrylate, polystyrene, melamine formaldehyde, urea formaldehyde, or polyvinyl alcohol. Selection of polymeric material, which is wall material for the solid particles, will depend on the end use of the encapsulated material. Sometimes copolymers derived from different monomers may be used to achieve desired properties for a specific end use of the encapsulated material.

The size of the particle can have a range from 1 nm (nanometer) to 2000 nm, or even to 5000 nm. In one aspect the size of the uncoated particles ranges from 1 nm to 5000 nm, or even from 1 nm to 2000 nm, or from 1 nm to 1500 nm. The polymeric coating of the invention results in an encapsulated particle at a size from greater than 1 nm to 7500 run, or even to 5000 nm, or even from 3 nm to about 3500 nm, or even from 10 nm to 2500 nm, or even from 10 nm to 2000 nm. Larger particles of a size from 2 microns to 100 microns or from 2 microns to 1000 microns are possible, if the polymeric coated particulates are agglomerated.

In addition to the various addition polymers described herein, the polymeric material making up the polymeric coating is defined in the claims and is the same as the polymeric material that makes up the stanchions, and both can also be comprised of a reaction product of two wall forming components comprising a diacid and a diol, a diester and a diol, a metal salt of dibasic acid and a dihalide, glycol ester and diacid, diacid chloride and dial, ethylene carbonate and diacid, anhydride and diol, diphenol and diacid, diacetate of diphenol and diacid, alkali metal salt of diphenol and a diacid halogen, a diamine and a dianhydride, or a tetramine and a dianhydride.

The encapsulation process transforms one or more monomeric materials into a polymeric coating on a particle such as titanium dioxide, and also can give rise to stanchioning and one or more macro molecular particle separators. Applicants have surprisingly found that by carefully managing mixing speed range of the coating process and concentration gradient during monomer addition, the size and degree of stanchioning and formation of particle separators can be affected. Optionally, particle separators can be separately added. More efficiently, the separators are optimized to form during the encapsulation process, along with the stanchioning. The stanchions are of the same polymeric material as the polymeric coating. Optionally, the particle separators and stanchions are the same polymeric materials as the polymeric coating on the particles. However, optionally, each can be formed from a different monomeric material.

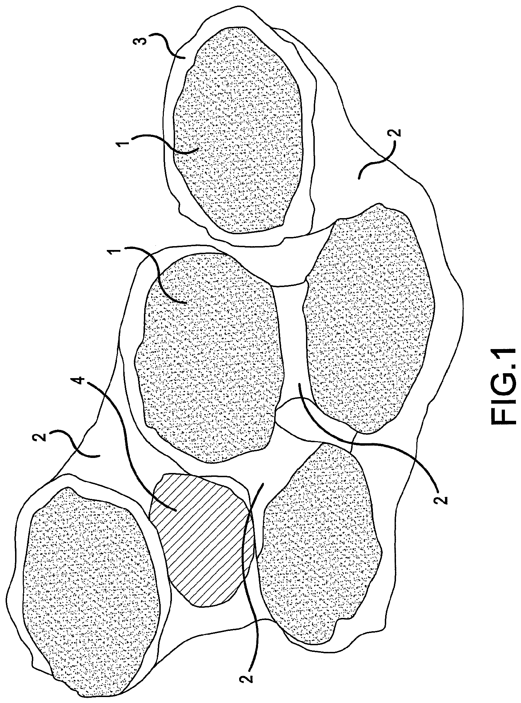

With reference to the figures, in particular Fig. 1, pigment particles 1 are depicted surrounded by polymeric coating 3. The stanchions 2 of the present invention are projections of the particles of the composition that can form bridging between the particles. Stanchions 2 are of the same material as polymeric coating 3. Particle separators 4 and stanchions 2 provide increased spacing between particles 1 and contribute to a decrease in density along with stanchions 2.

The novel stanchions of the present invention contribute to an increased spacing between the coated particles in the composition. The particle separators can also contribute to an increased spacing between the coated particles in the composition. Thus, the stanchions, and particle separators, individually or combined, allow for a reduced density of the coated particles required and lead to higher opacity values when the particle composition is used, for example, in a coating for paper. In addition, the stanchions of the present invention allow for a stable suspension and a higher level of brightness, when the particle composition is formed as a slurry or powder coating.

In the present invention, the stanchions for particle to particle bridging, on average, have a length that is between 10 and 500 nm. In addition, each stanchion has a width of less than about 2X the radius of the coated particle from which the stanchion extends. The average number of stanchions, or frequency of stanchions of the particle composition is from about less than 0.2 to about 6 stanchions per coated particle of the particle composition.

In one embodiment the stanchion length can vary from a fraction of the average particle diameter to several times the particle diameter.

In yet another embodiment, the stanchion length can range from 0.01 d to about 3.5 d, or even from 0.1 d to about 2 d, or even from 0.5 d to I d, where d is the polymer coated particle diameter.

In the preceding paragraphs, the number and dimension of the stanchions of the present invention are discussed. The method utilized for determining these characteristics is detailed below.

Method For Determining Number Of Stanchions and Stanchion Dimensions

1. Prepare photographic images of sample via TEM or SEM using the procedures and instrumentation described below.

2. Select representative images from the photographs.

3. The images will be two dimensional depictions of the sample

4. Utilizing only those pigment particles that are fully shown in the photograph and are not partially cut off, count the number of stanchions on each particle, keeping a running total of the number of stanchions counted and the number of pigment particles until a statistically significant number of pigment particles and their corresponding stanchions are recorded.

5. Stanchions are identified as those structures that connect two or more pigment particles together or protrude by two times or more of the standard coating thickness.

6. Stanchion dimensions are measured as follows:

a. Stanchion Length: Draw a line from one pigment particle to the next while dividing the stanchion in half. Measure the distance from the first particle to the second using the scale on the photograph and record the distance. Repeat for all other identified stanchions.

i. Note: If a stanchion is only anchored to a single pigment, then draw a line from the pigment to the tip of the stanchion that divides the stanchion in half. Measure the distance from the pigment particle to the tip of the stanchion using the scale on the photograph and record the distance.

b. Stanchion Width: Draw a line perpendicular to the stanchion length line at the point halfway along the length of the stanchion. Measure the distance across the stanchion using the scale on the photograph and record the distance. Repeat for all other identified stanchions.

7. Using equations 1-1, 1-2 and 1-3 below, calculate the average stanchion length, average stanchion width and average number of stanchions.

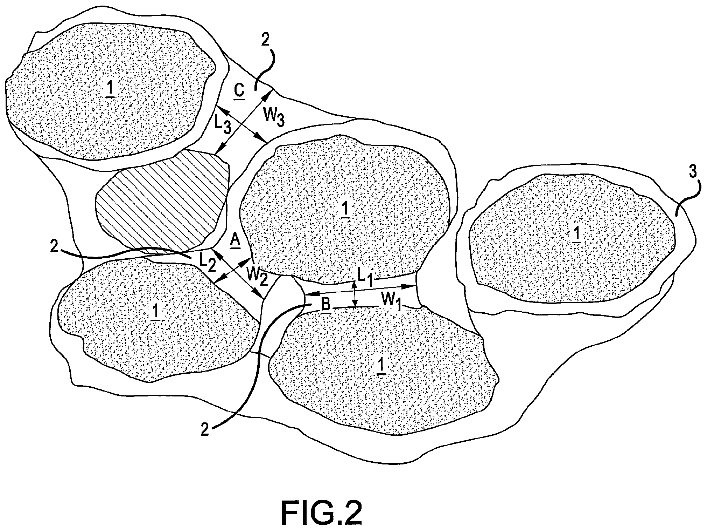

Please refer to Fig. 2 for an indications of examples for the following variables:

1 = TiO$_2$ particle
A, B, C = Stanchions
Width (W) and Length (L) are measured microscopically and averaged Number of stanchions (S) per particle are counted and then averaged

$$W_{ave} = \frac{1}{n} \sum_{i=1}^{n} W_i = \frac{W_1 + W_2 + \cdots + W_i}{n} \qquad (1\text{-}1)$$

$$L_{ave} = \frac{1}{n} \sum_{i=1}^{n} L_i = \frac{L_1 + L_2 + \cdots + L_i}{n} \qquad (1\text{-}2)$$

$$S_{ave} = \frac{1}{n} \sum_{i=1}^{n} S_i = \frac{S_1 + S_2 + \cdots + S_i}{n} \qquad (1\text{-}3)$$

Methods for preparing photographic images of sample via TEM and SEM are detailed below.

TEM Test Method

The aqueous TiO$_2$ suspensions were diluted with distilled water and sonicated in a sonicator (Cole-Parmer Model 8890) for 5 minutes. A drop of the solution was put on a 300 mesh Formvar grid and allowed to sit for 5 minutes. The remaining solution was gently blotted away and the grid was allowed to air dry. The sample grids were subsequently examined in bright field mode on an FEI Tecnai Spirit BioTWIN transmission electron microscope operating at 120 kV. Images were collected on an Eagle 2k x 2k camera and subsequently converted to tiff format.

An alternative method was to embed the encapsulated Ti07 powders in a resin, for example an acrylic or an epoxy resin, in an embedding mold, and then the sample was cut into ultra-thin sections (40-60 nm thick) using a diamond knife by ultra-microtome (Richelt Ultracut E) after the resin had been cured. The captured sections were place on copper grids, and images were subsequently collected on a Hitachi H-7500 transmission electron microscope.

SEM Test Method

SEM images were collected with a field emission scanning electron microscope (FESEM), for example, Helio NanolabrM 650 manufactured by FEI Company (5350 NE Dawson Creek Drive, Hillsboro, OR 97124). The sample of aqueous $TiO_2$ suspensions were frozen and prepared in a cryo specimen preparation chamber, and the sample was then milled with focused ion beam (FIB) to reveal the cross section of the sample, polished to remove the rough milling artifacts. Images were then collected after a small amount of water was liberated from the across section, revealing the morphology and structure of the particles. 100391

A method for measuring the zeta potential of the coated particles of the present invention is detailed below.

Measurement of Zeta Potential

The zeta potential of the encapsulated $TiO_2$ particles was measured with a ZETA-check Zeta Potential Analyzer available from Microtrac, 148 Keystone Drive, Montgomeryville, PA 18936 USA. The $TiO_2$ slurry was diluted with 1 mmol/L, sodium chloride solution, and was then transferred to the test sample jar of the instrument. Both the piston for mixing the sample jar and the pH probe were rinsed with de-ionized water and were installed in place. The zeta potential was measured at each pH point in the test sample. The pH in the test sample was adjusted by titration with 0.1 N hydrogen chloride or 0.1 N sodium hydroxide solutions, and the zeta potential for each measurement was collected by the instrument.

A method for determining the median particle size of the coated particles of the present invention is detailed below.

Determination of Median Particle Size

Median particle size is measured using a Zetasizer, made by Malvern Instruments, Ltd, Enigma Business park, Grovewood Road, Malvern, Worcestershire, WR14 1XZ, United Kingdom. Samples for particle size evaluation are prepared by diluting 1 drop of the encapsulated $TiO_2$ slurry in 1 milliliter of de-ionized water in a cuvette, which is then placed in the sample cell of the instrument. The instrument will display the results, including volume weighted median size.

With reference to Fig. 2, the broadness index can be calculated by determining the particle size at which 95% of the cumulative particle volume is exceeded (95% size), the particle size at which 5% of the cumulative particle volume is exceeded 95% size), and the median volume-weighted particle size (50% size-50% of the particle volume both above and below this size). Broadness Index =((95% size)-(5% size)/50% size).

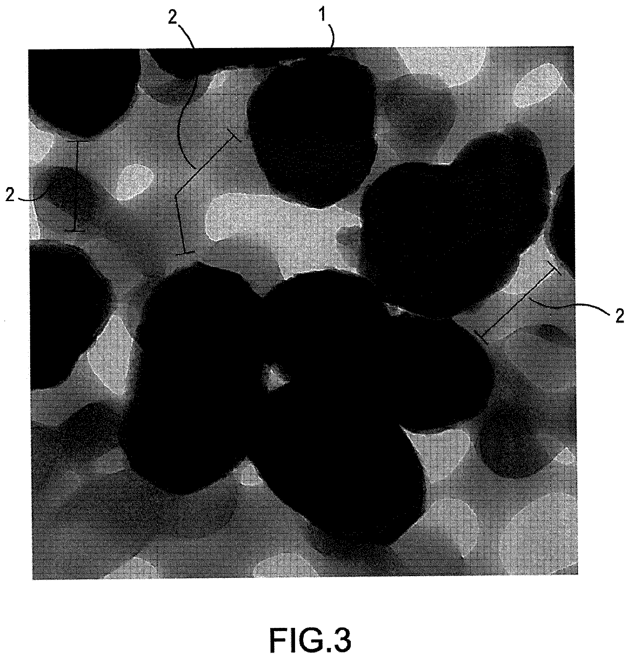

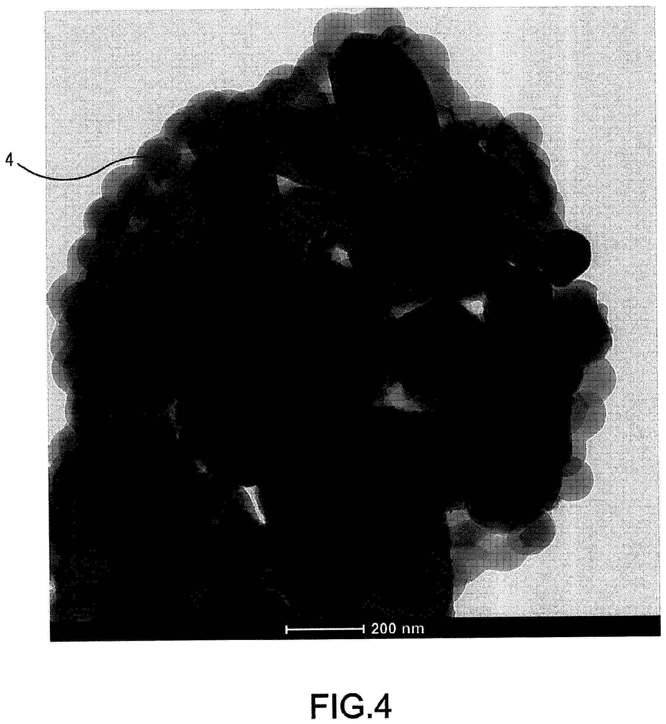

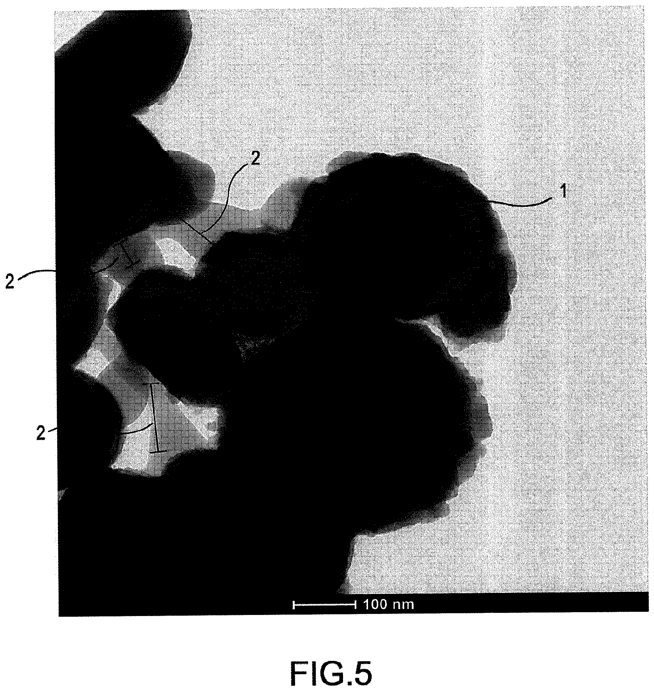

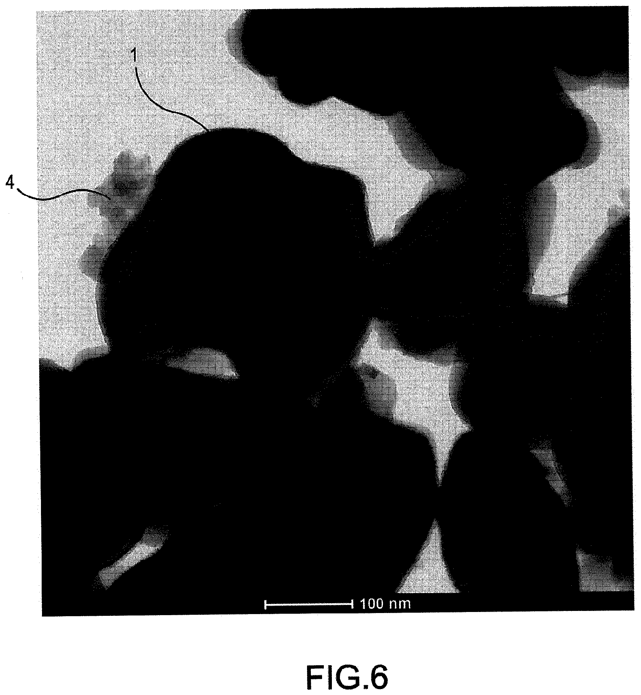

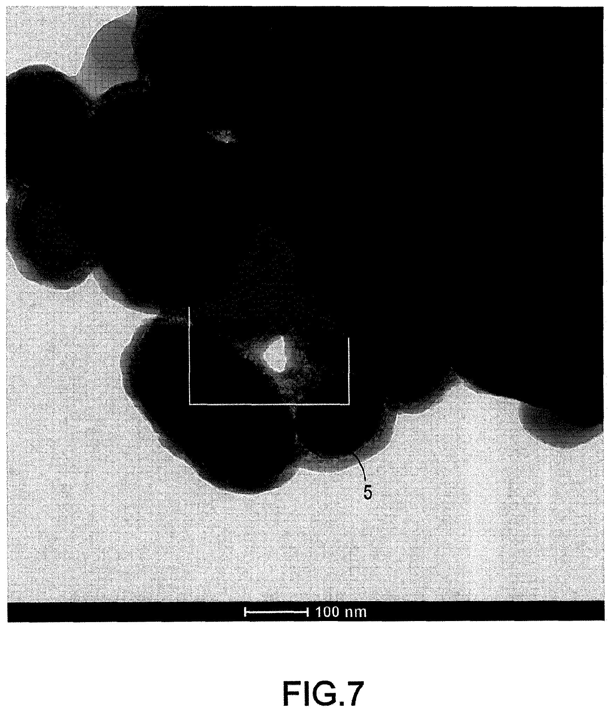

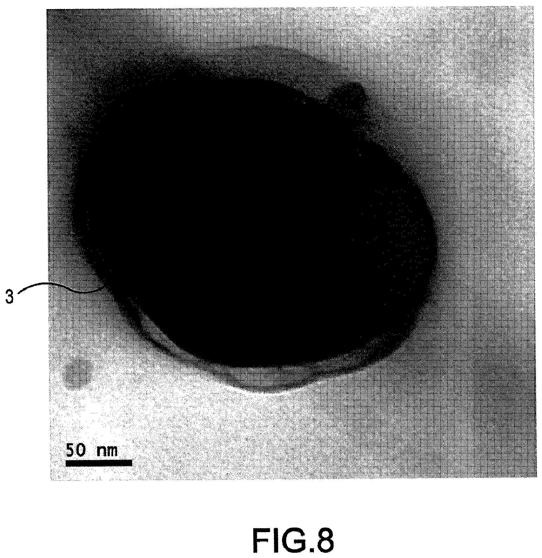

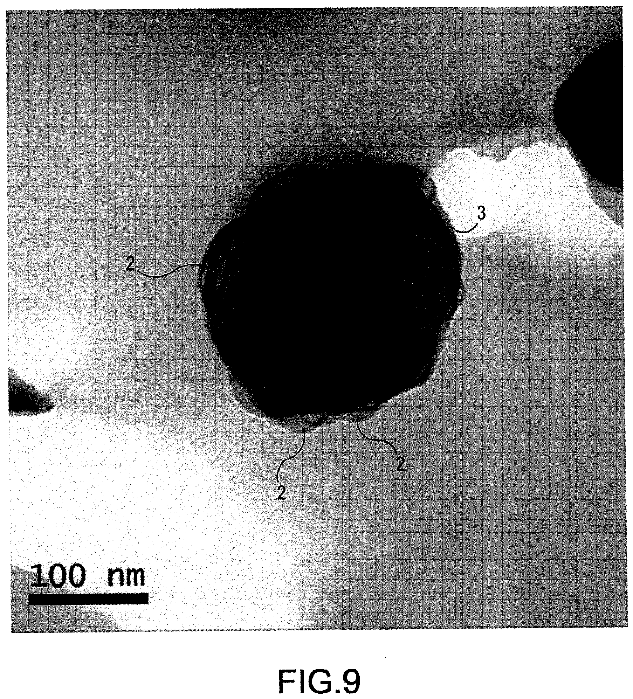

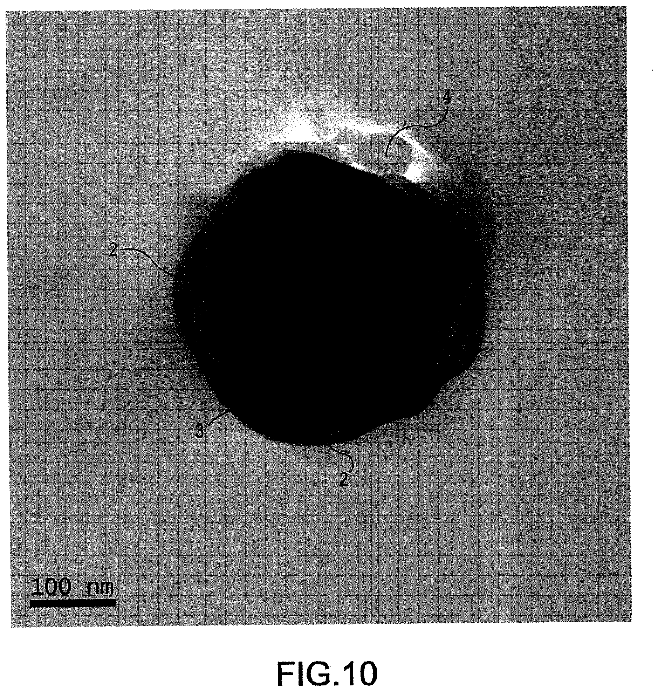

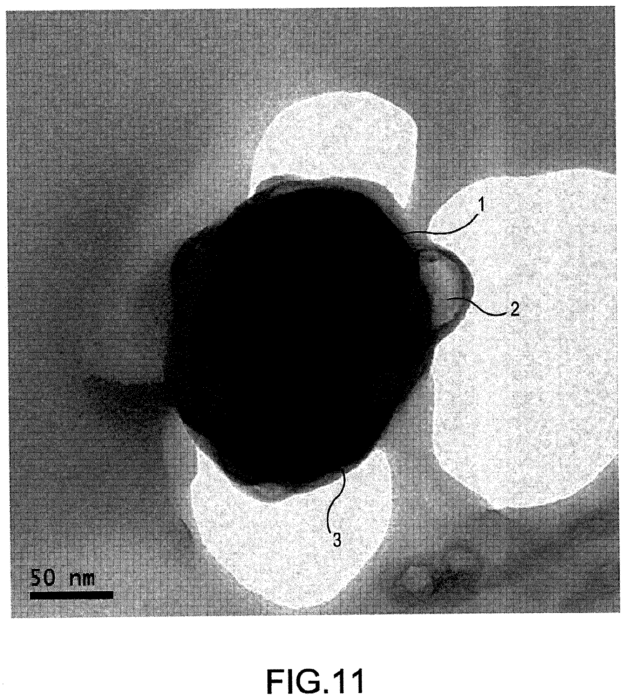

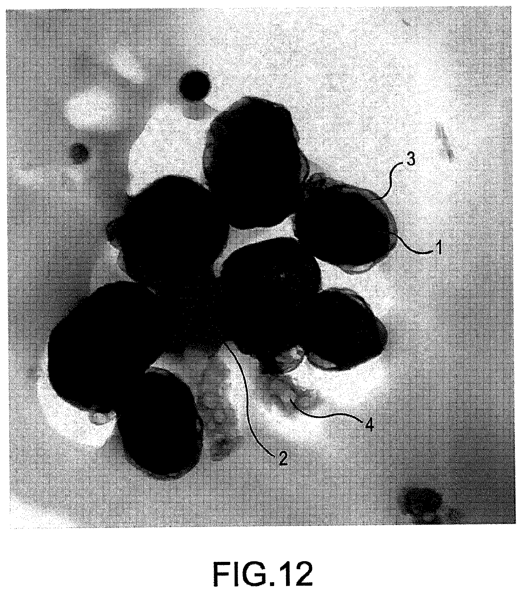

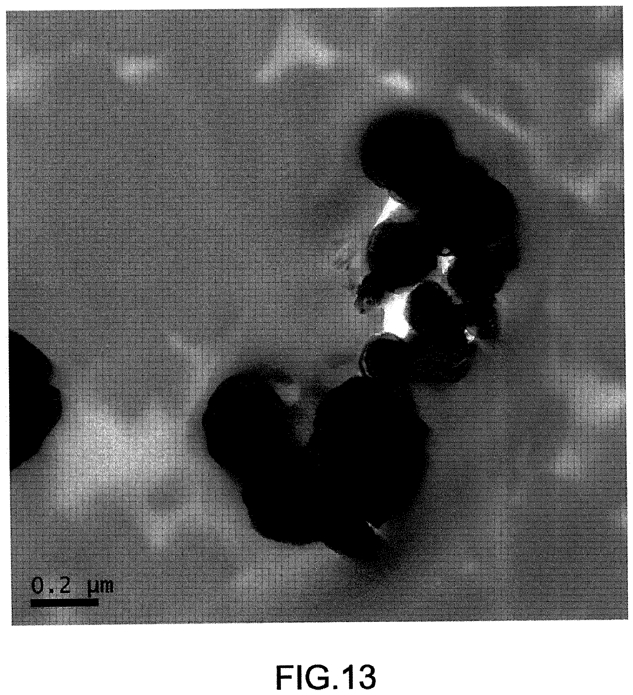

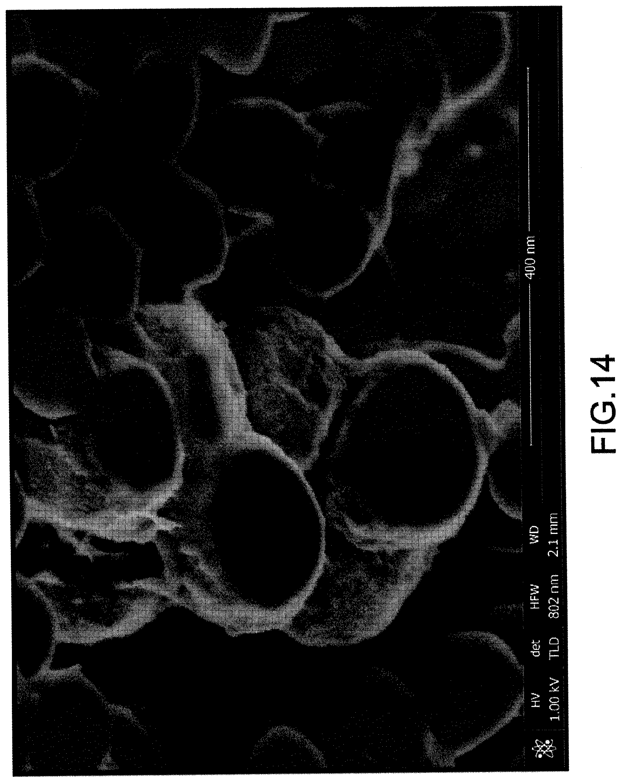

Figs. 3-13 are TEM photos of a particle composition consistent with the present invention. In particular, in Fig. 7, an area of bridging between stanchions of multiple particles 5 can be seen in the bottom of the photo. Further, In Fig. 11, a single particle 1 coated in a polymeric coating 3 in accordance with the present invention is shown which further includes stanchions 2. That is, in this figure, bubble-like projections extend from the surface of a polymeric coating of a particle, in this example, from the methyl methacrylate coating over a titanium oxide particle. In the SEM photo of Fig. 14 polymer coating details of an exemplary particle composition are shown.

As noted above, the particle composition of the present invention can further comprise discrete particle separators between the particles of pigment material. These discrete particle separators are formed from a polymeric material of the stanchions or coating layer and can be in the form of small spherical structures. The discrete particles separators are formed between the particles of the composition and cause separation of the particles and have a particle size range between 1 nm to 5 urn (microns), or even from 1 nm to 2 um or1 0 even from 1 nm to L5 urn or even from 1 nm to 100 UM. A desirable range for the size of the particle separators is from 5 nanometers to 1500 nanometers.

In a yet further embodiment, the discrete particle separators can range in size from 0.01d to about 3.5d or even from 0.01d to about 5 d, where d is the diameter of the polymeric coated particle.

Since the discrete particle separators contribute to increasing the spacing of the particles in the present composition, the benefits of reduced density of the coated particles and higher opacity values also result from this feature. In addition, similarly to the stanchions of the present invention, the discrete particle separators also allow for a stable suspension and a higher level of brightness, when the particle composition is formed as a slurry.

As noted, the features of the present invention contribute to a reduced density of particles in the composition. The encapsulated particle composition of the present invention can have a lower density value as compared to the density value of the unencapsulated pigment. In particular, the particle composition of the present invention can have a density of less than 2.72, for example, for encapsulated $T1O_2$, or even at least 32% lower than the density value of unencapsulated pigment $Ti0_2$ material. The density value of the encapsulated particle composition of the invention can be at least 10%, or even at least 20%, or even at least 30%, or even at least 32%, or even at least 40% lower than the density value of the un-encapsulated pigment material.

The density of an encapsulated particle can be calculated based on the ratio of core to wall by mass, and the densities of the core and wall materials. For a single wall material, the density of the encapsulated particle can be expressed as follows:

$$d = \frac{1+R}{\dfrac{1}{dc} + \dfrac{R}{dw}} \tag{1}$$

where

d - Density of an encapsulated particle.
R - Mass ratio of capsule wall to core materials in the encapsulated particle.
dc, dw - density of core and wall materials, respectively.

For multiple wall materials, Eq. (1) becomes

$$d = \frac{1+\sum Ri}{\dfrac{1}{dc} + \sum \dfrac{Ri}{dwi}} \tag{2}$$

Where

Ri = Mwi/Mc
Mwi - mass of capsule wall material component i
Mc - mass of capsule core material.
dc, dwi - density of core and wall material component i, respectively

Derivation of the equation

$$d = \frac{Mc + Mw}{Vc + Vw} = \frac{Mc + Mw}{\dfrac{Mc}{dc} + \dfrac{Mw}{dw}} \tag{3}$$

where

d - density of a encapsulated particle
Me, Mw - mass of core and wall materials, respectively
Vc, Vw - volume core and wall materials, respectively
dc, dw - density of core and wall materials, respectively
Let R = Mw/Mc, and substitute R into Eq. (3), one obtains Eq. (1).

The composition, including stanchions and separators, can have a ratio by weight of polymer to total material that is from about 10 to less than about 60 wt %.

Other exemplary characteristics of the present invention include improved gloss value when laid down as a paper coating or filler, as compared to gloss values from unencapsulated pigment.

The particle composition comprised of $TiO_2$ pigment material surprisingly has an oil absorption of 22.0 grams oil/ 100 grams (g) sample, +1-0.5 g . Conventional TiO2 pigment material TiPure 706 (DuPont), for example, has an oil absorption of 13.9 g oil/100 g sample. Oil absorption, for example, for $TiO_2$ encapsulated according to the invention with an alkyl (meth)acrylate can range from 14 to 30 grams oil/ 100 grams sample. With other coating material or with other pigments the oil absorption can vary, and can be selected higher or lower through selection of more or less porous coating.

Through the process and composition of the invention as described herein, the particle composition can be selected to have a zeta potential over a range or from greater than -180 mV to less than +60 mV.

The particle composition is generally anionic but can be made cationic, or even nonionic by monomer selection or additives to the polymeric material.

Further, the particle composition of the present invention can comprise a filler for paper substrates, which at loading levels of up to 35% by weight of the substrate results in an opacity value (Tappi T 425) for the paper substrate,

which is equal or greater than the sheet filled with two times (2X) the equivalent weight of conventional filler. The invention makes it possible to achieve the same or better opacity at half the loading level, or less, of the amount of pigments required, such as $TiO_2$. In commercial applications, it is possible to use less pigment material for the same or better opacity.

The method for the production of the composition of the present invention includes the following steps:

1. Preparing an aqueous solution comprising dispersing agent(s) in a beaker;

2. Dispersing solid particles into the above prepared aqueous solution to form a suspension with a mixer;

3. Adjusting pH of the suspension to 9-10 by the addition of 10% sodium hydroxide solution;

4. Homogenizing the suspension to achieve a good dispersion of the particles in water;

5. Transferring the suspension into a reactor containing additional water;

6. Purging the reactor with nitrogen gas;

7. Adding wall materials into the reactor, which can be monomers and/or oligomers;

8. Adding initiator(s);

9. Raising the temperature in the reactor to initialize the polymerization of the monomers and/or oligomers;

10. Maintaining the temperature and controlling process variables during the polymerization to control wall deposition, and to minimize the agglomeration of the encapsulated particles.

The solid particles can be substantially insoluble in water, such as titanium dioxide, calcium carbonate, barium sulfate, zinc oxide, lead oxide, zinc sulfide, iron oxide, talc, clays, silica, or carbon black.

The dispersing agents can be an organic or an inorganic chemical, or a combination thereof. Typical dispersing agents that can be used include sodium dodecyl sulfate, sodium silicate, sodium polyphosphate, sodium alkyl sulfonate, sodium alkylbenzene sulfonate, sodium alkylnaphthalene sulfonate, polyacrylic acid and its derivatives, polymethacrylic acid and its derivatives, polyethylene oxide and its derivatives, styrene maleic anhydride copolymers.

For a given particle to be encapsulated with a specific wall material, specific dispersing agent(s) has to be selected to achieve desired wall deposition.

The particle in water suspension can be prepared by any means, such as a mechanical shear, a homogenizer, a rotorstator mixer, an in-line mixer, a microfluidic mixer, or an ultrasonic device.

In addition to the polymeric materials mentioned earlier, preferred examples of the polymeric material useful for the wall materials include polyacrylate, polymethacrylate, polyalkyl(meth)acrylate, polystyrene, melamine formaldehyde, urea formaldehyde, or polyvinyl alcohol. Selection of wall materials will depend on the end use of the encapsulated material. Sometimes copolymers derived from different monomers may be used to achieve desired properties for a specific end use of the encapsulated material. Examples 1 and 2 below illustrate the invention with regard to methyl methacrylate as a polymeric material.

Initiators and/or catalysts may be used to initiate the polymerization reaction. Selection of initiators and/or catalysts depends on the wall materials used. For acrylic monomers, sodium persulfate, ammonium persulfate, or redox initiators may be used.

If desired, the charge of the encapsulated particle can be modified. The charge of the encapsulated particle can be altered in zeta potential. The observed zeta potential tends to be positive at low pH and lower or negative at high pH. By selection of emulsifiers, initiators, monomers or additives in the encapsulation process, the encapsulated particle can be modified to be anionic, nonionic, or cationic through selection of emulsifier.

For example, Schwantes, U.S. Patent No. 8,067,089 teaches forming cationic charged or neutral micro capsules through use of a cationic or nonionic emulsifiers. Cationic emulsifiers can include amines with primary, secondary or tertiary functionality. Nonionic emulsifiers can include polymers with hydroxyl, ether, ester, ketone and amide functionality.

Cationic emulsifiers can be selected from palmitamidopropyltrimonium chloride, distearyl dimonium chloride, cetyltrimethylammonium chloride, quaternary ammonium compounds, fatty amines, aliphatic ammonium halides, alkyldimethylbenzylammonium halides,alkyldimethylethylammonium halides, polyethyleneimine, poly(2-dimethylamino)ethyl methacrylate)methyl chloride quaternary salt, poly(1-vinylpyrrolidone-co-2-dimethylaminoethyl methacrylate), poly(acrylamide-co-diallyldimethylammoniumchloride), poly(allylamine), po ly [b is (2-chlo roethy Dether-alt-1,3 -bis13 -(dimethylamino)propyllurea] quaternized, and poly(dimethylamine-co-epichlorohydrin-co-ethylenediamine), and condensation products of aliphatic amines with alkylene oxide.

In an alternative embodiment, the emulsifier is nonionic. Nonionic emulsifier can selected from polyalkylene glycol ether, condensation products of alkyl phenols, aliphatic alcohols, or fatty acids with alkylene oxide, ethoxylated alkyl phenols, ethoxylated arylphenols, ethoxylated polyaryl phenols, carboxylic esters solubilized with a polyol, polyvinyl alcohol, polyvinyl acetate, or copolymers of polyvinyl alcohol polyvinyl acetate, polyacrylamide, poly(N-isopropylacrylamide), poly(2-hydroxypropyl methacrylate), poly(2-ethyl-2-oxazoline), poly(2-isopropenyl-2-oxazoline-co-methyl methacrylate), poly(methyl vinyl ether), and polyvinyl alcohol-co-ethylene).

Cationic emulsifier can include polyalkylenimine compounds wherein the alkylene moieties are from 2 and 8 carbons, and more useful are molecular weights of from 1000 to about 250000.

Useful amines can include, by way of illustration and not limitation, amine modified vinyl monomers including amine modified acrylates or methacrylates such as mono or diacrylate amines, mono or dimethacrylate amines, amine modified polyetheracrylates and amine modified polyethermethacrylates, aminoalkyl acrylates or aminoalkyl methacrylate.

The amines can include primary, secondary or tertiary amines and can include tertiary butyl aminethylmethacrylate, diethylaminoethyl methacrylate, or dimethylaminoethyl methacrylate.

Suitable emulsifiers can include amphoteric emulsifiers and zwitterionic emulsifiers. Cationic emulsifiers include palmitamidopropyltrimonium chloride (trademark Variso ft Patch, Evonik Degussa GmbH, Essen, Germany) distearyl dimonium chloride, cetyltrimethylammonium chloride, and polyethyleneimine.

In some embodiments, it is desirable that the emulsifier is physically or chemically bound or entangled to the external surface of the encapsulated pigment particles. Such physical bindings include, for example, hydrogen bonding, ionic interactions, entanglement, hydrophobic interactions, and electron transfer interactions. Such chemical bindings include, for example, covalent bindings such as covalent grafting and crosslinking. The emulsifier can be added during the process of encapsulation or as a post-treatment after the encapsulate is formed.

The emulsifier is typically present at a level by weight of from about 0.1% to about 40%, from about 0.5% to about 10%, or from about 0.5% to about 5%, by weight of the encapsulated particle. In one embodiment, the polymeric wall material is a polyacrylate or polyalkylacrylate, to which the emulsifier is added during the process of encapsulation, or as a post- treatment.

Anionic emulsifiers can include, by way of illustrating and not limitation, watersoluble salts of alkyl sulfates, alkyl ether sulfates, alkyl isothionates, alkyl carboxylates, alkyl sulfosuccinates, alkyl succinamates, alkyl sulfate salts such as sodium dodecyl sulfate, alkyl sarcosinates, alkyl derivatives of protein hydrolyzates, acyl aspartates, alkyl or alkyl ether or alkylaryl ether phosphate esters, sodium dodecyl sulphate, phospholipids or lecithin, or soaps, sodium, potassium or ammonium stearate, oleate or palmitate, alkylarylsulfonic acid salts such as sodium dodecylbenzenesulfonate, sodium dialkylsulfosuccinates, dioctyl sulfosuccinate, sodium dilaurylsulfosuccinate, poly(styrene sulfonate) sodium salt, isobutylene-maleic anhydride copolymer, gum arabic, sodium alginate, carboxymethylcellulose, cellulose sulfate and pectin, poly(styrene sulfonate), isobutylene-maleic anhydride copolymer, gum arabic, carrageenan, sodium alginate, pectic acid, tragacanth gum, almond gum and agar; semi-synthetic polymers such as carboxymethyl cellulose, sulfated cellulose, sulfated methylcellulose, carboxymethyl starch, phosphated starch, lignin sulfonic acid; and synthetic polymers such as maleic anhydride copolymers (including hydrolyzates thereof), polyacrylic acid, polymethacrylic acid, acrylic acid butyl acrylate copolymer or crotonic acid homopolymers and copolymers, vinylbenzenesulfonic acid or 2-acrylamido-2-methylpropanesulfonic acid homopolymers and copolymers, and partial amide or partial ester of such polymers and copolymers, carboxymodified polyvinyl alcohol, sulfonic acid-modified polyvinyl alcohol and phosphoric acid-modified polyvinyl alcohol, phosphated or sulfated tristyrylphenol ethoxylates.

In an alternate embodiment, it is useful to use anionic emulsifiers that have acrylate functionality since these can be covalently linked to the shell or wall portion of the polymeric coating encapsulating the pigment particles, particularly when the polymeric material encapsulating the solid particles is polyacrylate or an alkyl acrylate acrylic acid copolymer. During the process of encapsulating the pigment particles, emulsifiers can be included. Anionic emulsifiers can include, but are not limited to poly(meth)acrylic acid; copolymers of (meth)acrylic acids and its (meth)acrylates with C 1 -C26 alkyl, C1-C22 alkyl, such as butyl, copolymers of (meth)acrylic acids and (meth)acrylamide; carboxyvinylpolymer, acrylate copolymers such as acrylate/C 10-30 alkyl acrylate crosspolymer, acrylic acid/vinyl ester copolymer/acrylates/vinyl Isodecanoate crosspolymer, acrylates/ trademarks Palmeth-25 acrylate copolymer, Actylate/Steareth-20 Itaconate copolymer, and Acrylate/Celeth-20 Itaconate copolymer, polystyrene sulphonate, copolymers of methacrylic acid and acrylamidomethylpropane sulfonic acid, and copolymers of acrylic acid and acrylamidomethylpropane sulfonic acid, carboxymethycellulose; carboxy guar, copolymers of ethylene and maleic acid, and acrylate silicone polymer. In some embodiments, if desired, neutralizing agents may be included to neutralize the anionic emulsifiers herein. Non-limiting examples of such neutralizing agents include sodium hydroxide, potassium hydroxide, ammonium hydroxide, monoethanolamine, diethanolamine, triethanolamine, diisopropanolamine, aminomethylpropanol, tromethamine, tetrahydroxypropyl ethylenediamine, and mixtures thereof. Commercially available anionic emulsifiers include, for example, Carbomer supplied from Noveon under the trademark Carbopol 981 and Carbopol 980, acrylates/C10-30 alkyl acrylate copolymers sold under name Pemulen TR-1, Pemulen TR-2, Carbopol 1342, Carbopol 1382, and Carbopol ETD 2020, such as available from Noveon, sodium carboxymethylcellulose (Hercules CMC series), and acrylate copolymer (trademark Capigel from Seppic).

Optionally, the pigment may be coated, such as with a cationic polymer. In a sense, the encapsulated pigment particle can be considered a microcapsule. With anionic polymeric wall material encapsulating the solid particle, the cationic polymer allows partial or complete neutralization of the negative electrical charge borne by the encapsulated solid particles, or microcapsule wail material, or even the conversion of the negatively-charged encapsulated particles into positively-charged encapsulated particles.

In one embodiment, useful cationic polymers can comprise cationic cellulose derivatives, such as those available under the trademark Ucare, and quaternized gums, such as quaternized guar gums available under the trademark Jaguar ( Rhodia), polyethylene imine, such as those available commercially under the trademark Lupasol (BASF), cationic polyacrylates and acrylamides, gelatine and quatemized protein hydrolysates, and quaternized amino silicones.

Other cationic compounds that can be used include the polyquaternium materials which have a plurality of quaternary ammonium groups, polymeric species such as diallyl dimethyl ammonium chloride/acrylamide polymers, for example, those available under the trademark Merquat (Nalco), and copolymers of vinyl pyrrolidone and quaternized dimethylaminoalkyl methacrylate, for example, those available under the trademark Gafquat HS 50 and HS 100 (ISP).

Optionally, the surface properties of the encapsulated particles can be altered by incorporating different monomers and/or oligmers with desired functionalities. Examples of monomers with carboxylic groups include acylic acid, methacrylic acid, crotonic acid, 2-ethylacrylic acid, 2-pentenic aicd, 4-pentenic acid, 2-propylacrylic acid, 2-octenoic acid, 3-vinylbenzoic acid, 4-vinylbenzoic acid, trans-3-benzoylacrylic (4-oxo-4-phenyl-2-butenoic) acid, 2-bromoacrylio acid, 2-bromomethyl-acrylic acid, 10-undecenoic acid, palmitoleinic acid, fumaric acid, and maleic acid.

Examples of monomers with amino groups include methacrylamide, N-methyl methacrylamide, N-(2-methacryloyloxyethyl)ethyleneurea, and 3 -d ime th ylam inop ropyl)meth acrylami de.

Optionally, the surface properties of the encapsulated particles can be altered by using different initiators with desired functionalities. Examples of initiators include 4, 4'-azobis(4-cyanovaleric acid), 2,2'-azobis(2-methylpropionamidine) dihydrochloride, 2,2'-azobis[2-(2-int i dazolin-2-yl)pro pane]dihydm chlor i de, 2 ,2'-azob is[2-(2-imidazol in-2-yl)pro pane]disulfate dehydrate, 2,2'-azobis[N-(2-carboxyethyl)-2-methylpropionamidine]hydrate, 2,2'-azobis[2-(2-imidazolin-2-yl)propane], 2,2'-azobis(1-imino-1-pyrrolidino-2-ethylpropane)dihydrochloride, and 2,2$^1$-azobis [2-methyl-N-(2-hydroxyethyl)propionamide.

## Examples

Example 1: Encapsulation of titanium dioxide from a dry powder grade.

Preparation of $TiO_2$ suspension: To a pre-dispersion reactor was added 159 grams of de-ionized water at room temperature, followed by addition of 0.9 grams of sodium polyphosphate under agitation. After mixed for 10 min, 91.3 grams of titanium dioxide powder (Ti-Pure R796+, available from DuPont) was added to the reactor with continued agitation. The pl-I of the suspension was adjusted to 9.6 with 10% sodium hydroxide solution. The suspension was then homogenized at 10,000 rpm with a homogenizer from Polytron for 3 min, and the $TiO_2$ particle size was then analyzed with a Malvern Zetasizer available from Malvern Instruments Ltd., Enigma Business Park, Grovewood Road, Worcestershire, WR14 DCZ, United Kingdom.

Encapsulation: To a reactor was added 498 grams of De-ionized water, followed by 0.19 grams of sodium dodecyl sulfate (SDS, available from Sigma Aldrich) under agitation with a three blade propeller. After mixing for 10 minutes, the $TiO_2$ suspension prepared above was transferred into this reactor. The reactor was then purged with nitrogen at a flow rate of 300 ml/min. To the reactor was added 91.3 grams of methyl methacrylate (MMA), followed by 0.9 grams of potassium persulfate (KPS), both available from Sigma Aldrich. The reactor temperature was ramped from room temperature to 65°C over 90 minutes at a rate of 0.44°C/min, and then was held at 65°C for 8 hours to complete. The agitation speed was controlled at 275 rpm during this reaction period. The content of the reactor was then cooled at a rate of 1°C per minute.

Example 2: The encapsulated $TiO_2$ was prepared according to the procedures in Example 1, except that 0.23 grams of KPS was used, and the batch was mixed at 250 rpm during reaction period.

Example 3: The encapsulated $TiO_2$ was prepared according to the procedures in Example 1, except that 0.23 grams of KPS and 2 grams of SDS were used, respectively.

Example 4: The encapsulated $TiO_2$ was prepared according to the procedures in Example 1, except that 36.5 grams of MMA, 146 grams of R&96+ and 0.1 grams of KPS were used, respectively.

Example 5: The encapsulated $TiO_2$ was prepared according to the procedures in Example I, except that the batch was mixed at 500 rpm during reaction period.

Example 6: The encapsulated TiO2 is prepared according to the procedures in Example 1 except that the batch is mixed at 200 rpm during reaction period.

Example 7: The encapsulated TiO2was prepared according to the procedures in Example 1, except that a monomers mix prepared from 89.4 grams of MMA and 1.8 grams of methacrylic acid (MAA), and 0.23 grams of KPS were used, respectively. The batch was mixed at 400 rpm during reaction period.

Example 8: The encapsulated $TiO_2$ was prepared according to the procedures in Example 7, except that pH of the $TiO_2$slurry was adjusted to 8 before the addition of monomers mix of MMA and MAA, and that the batch was mixed at 300 rpm during reaction period.

Example 9: The encapsulated TiO2 is prepared according to the procedures in Example 8, except that a monomers mix prepared from 89.3 grams of MMA and 2 grams of 2-carboxylethyl acrylate (CEA) is used.

Example 10: The encapsulated $TiO_2$ is prepared according to the procedures in Example 7, except that a monomers mix prepared from 89.3 grams of MMA and 3 grams of methacrylamide (MA) is used.

Example 11: The encapsulated $TiO_2$ is prepared according to the procedures in Example 1, except that 1 grams of V-501 [4, 4 '-azobis (4-cyanovaleric acid), available from Wako Pure Chemicals Industries, 1-2 Doshomachi 3-Chome, Chuo-ku, Osaka 540-8605, Japan] is used to replace the initiator KPS.

Example 12: The encapsulated $TiO_2$ is prepared according to the procedures in Example 1, except that 1gram of V-50 [2,2'-azobis(2-methylpropionamidine)dihydrochloride, available from Wako Pure Chemicals Industries, 1-2 Doshomachi 3-Chome, Chuo-ku, Osaka 540-8605, Japan] is used to replace the initiator KPS.

Example 13: The encapsulated $TiO_2$ was prepared according to the procedures in Example 1, except that TiOx-220 (an uncoated $T10_2$ available from Crimea Titan PISC, 96012 Armyansk, Severnaya promzona, Autonomic Republic of Crimea, Ukraine) was used to replace R796+.

Example 14: Encapsulated calcium carbonate particles are prepared according to the procedures in Example 1, except that Hydrocarb 90 (available from Omya) is used to replace R796+.

Example 15: Encapsulated kaolin particles are prepared according to the procedures in Example 1, except that Polyglosse 90 available from KaMin LLC, 822 Huber Road, Macon, GA 31217 is used to replace R796+.

Example 16: Encapsulated carbon black particles are prepared according to the procedures in Example 1, except that Mogul L (available from Cabot, 157 Concord Road, Billerica, MA 01821) is used to replace R796+.

Example 17: Encapsulation of titanium dioxide from a pre-dispersed $TiO_2$ slurry.

To a reactor was added 621 grams of de-ionized water, followed by 0.19 g of sodium dodecyl sulfate under slow agitation with a three blade propeller. After mixed for 10 min, 127.6 grams of pre-dispersed Ti-Pure RPS Vantage TiO2 suspension was transferred into this reactor. The reactor was then purged with nitrogen at a flow rate of 300 ml/min. To the reactor was added 91.3 g of methyl methacrylate, followed by 0.9 grams of potassium persulfate, both available from Sigma Aldrich. The reactor temperature was ramped from room temperature to 65°C over 90 minutes at a rate of 0.44°Chnin, and then was held at 65°C for 8 hours. The agitation speed was controlled at 300 rpm during this period. The content of the reactor was then cooled at a rate of 1° C per minute.

The above examples can be used to produce an encapsulated pigment, such as titanium dioxide, coated with a polymeric material, such as a methyl methacrylate cross-linked polymer, in accordance with the invention of the present application. The composition of such product such as per example 1 above is outlined in Table 1 below.

Table 1

| Chemical Name | % by weight |
|---|---|
| Water | 78.14 |
| Sodium polyphosphate | 0.11 |
| Sodium dodecyl sulfate | 0.022 |
| Methyl methacrylate | 10.8 |
| Potassium persulfate | 0.027 |
| Titanium dioxide | 10.8 |
| Sodium hydroxide | 0.10 |
| | 100.0 |

The characteristics of the coated particles obtained in the Examples are detailed in Table 2 on the following page.

Table 2

| Examples | Mixing Speed (rpm) | Stanchions | | | Particle Separator Median Size (nm) | Encapsulated Median particle Size (nm) | Zeta Potential (mV) | Density |
|---|---|---|---|---|---|---|---|---|
| | | Average # of Stanchions Per particle, S | Average Stanchion Width, W (nm) | Average Stanchion Length, L (nm) | | | | |
| 1 | 275 | 0.1 - 4 | 20 - 500 | 20 - 500 | 25-1500 | 435±225 | -5 to -150 | 1.82 |
| 2 | 275 | 0.2 - 6 | 20 - 400 | 30 - 800 | 25-1500 | 200-600 | -5 to -150 | 1.82 |
| 3 | 275 | 0.1 - 2 | 10 - 300 | 15 - 450 | 25-1500 | 200-600 | -10 to -160 | 1.82 |
| 4 | 275 | 0.1 - 2 | 10 - 300 | 10-300 | 25-1500 | 255±250 | -10 to -160 | 2.72 |
| 5 | 500 | 0.1 - 3 | 10 - 300 | 15 - 450 | 25-1500 | 200-600 | -5 to -150 | 1.82 |
| 6 | 200 | 0.1 - 5 | 20 - 400 | 20 - 500 | 25-1500 | 200-600 | -5 to -150 | 1.82 |
| 7 | 400 | 0.1 - 3 | 10-300 | 15 - 450 | 25-1500 | 200-600 | -15 to -180 | 1.81 |
| 8 | 300 | 0.1 - 4 | 30 - 500 | 20 - 600 | 25-1500 | 200-600 | -15 to -175 | 1.81 |
| 9 | 300 | 0.2 - 3 | 10-300 | 15 - 450 | 25-1500 | 200-600 | -10 to -180 | 1.82 |
| 10 | 300 | 0.1 - 4 | 10 - 300 | 15 - 450 | 25-1500 | 200-600 | +30 to -120 | 1.82 |
| 11 | 275 | 0.2 - 4 | 10-300 | 15 - 450 | 25-1500 | 200-600 | -15 to -180 | 1.82 |
| 12 | 275 | 0.1 - 5 | 30 - 500 | 20 - 600 | 25-1500 | 200-600 | +30 to -120 | 1.82 |
| 13 | 275 | 0.1 - 4 | 10-300 | 20 - 500 | 25-1500 | 200-600 | -5 to -150 | 1.84 |
| 14 | 275 | 0.2 - 3 | 30 - 600 | 20 - 600 | 25-1500 | 900±450 | +20 to -130 | 1.64 |
| 15 | 275 | 0.1 - 5 | 10 - 400 | 20 - 500 | 25-1500 | 750±500 | +5 to -120 | 1.62 |
| 16 | 275 | 0.1 - 3 | 10-300 | 15 - 450 | 25-1500 | 100 -750 | +5 to -150 | 1.48 |

(continued)

| Examples | Mixing Speed (rpm) | Stanchions | | | Particle Separator Median Size (nm) | Encapsulated Median particle Size (nm) | Zeta Potential (mV) | Density |
| --- | --- | --- | --- | --- | --- | --- | --- | --- |
| | | Average # of Stanchions Per particle, S | Average Stanchion Width, W (nm) | Average Stanchion Length, L (nm) | | | | |
| 17 | 275 | 0.1 - 4 | 20 - 400 | 30 - 600 | 25-1500 | 420±225 | -5 to -160 | 1.82 |

encapsulation, and other such factors, $TiO_2$ particles can be successfully encapsulated with polymer particles adsorbed on or adhered to or entangled or bonded to adjacent $TiO_2$ particles forming several stanchioning bridges among the particles. These stanchions act as bridges effectively separate from the $TiO_2$ particles, and thus increase the opacifying capacity of the $TiO_2$ particles in coating due to the increase in light scattering efficiency. The stanchioning can reduce the susceptibility of the pigment, at least partially coated with a polymeric coating layer, from packing. Better tendency to disperse, less crowding, less packing and higher opacity are achievable with the encapsulated particle composition of the invention. The encapsulated pigment overall is of higher efficiency. Density of the encapsulated pigment is reduced relative to the unencapsulated pigment, making possible lighter coatings with up to more than half reduction in pigment loading level, yet having having same or better opacifying or whitening characteristics. Over two times the opacity is achievable with particles such as $TiO_2$. Over 50% reduction of $TiO_2$ has been achieved for obtaining the same opacity with the $TiO_2$ particles encapsulated by this invention as compared with the unencapsulated $TiO_2$. A comparison of brightness and color L, a, b values between unencapsulated $TiO_2$ powders and encapsulated powders consistent with the present invention is made in Table 3 below. Particle separator median size can range from 5 to about 90 nm. Thus, the particle composition of the present invention includes novel stanchions and discrete particle separators that provide distinct benefits over unencapsulated particles and over encapsulated particles without these features.

Table 3

| Comparison of Brightness and L*a*b* Summary | | | | |
|---|---|---|---|---|
| **Samples** | **Brightness** | **L\*** | **a\*** | **b\*** |
| $TiO_2$ Powders A | 64.02 | 85.48 | -0.77 | 3.49 |
| Encapsulated Powders A | 76.19 | 91.80 | -0.65 | 3.91 |
| $TiO_2$ Powders B | 59.52 | 83.27 | -0.77 | 3.71 |
| Encapsulated Powders B | 73.45 | 90.34 | -0.57 | 3.59 |
| Notes: 1. TiO2 dry powders were encapsulated, dried, and crushed into dry powders. Brightness and Color L*a*b** were then analyzed. 2. Encapsulated slurry and powders give higher Brightness and L values as compared to their respective starting materials. | | | | |

Example 18: Measurement of Stanchions

The dimension of stanchions and the average number of stanchions per pigment particle of encapsulated $TiO_2$ particles from Example 1 were measured from the TEM images with method described previously. The measured average length and width of the stanchions were 41nm and 80.1 nm, respectively, and the average number of stanchions per particle was 3.6 (as shown in Table 4 and Table 5.

Table 4. Length and Width of Stanchions

| Stanchion ID | Length (nm) | Width (nm) |
|---|---|---|
| 1 | 100.0 | 110.0 |
| 2 | 50.0 | 100.0 |
| 3 | 70.0 | 110.0 |
| 4 | 40.0 | 50.0 |
| 5 | 100.0 | 100.0 |
| 6 | 66.7 | 133.0 |
| 7 | 66.0 | 100.0 |
| 8 | 66.0 | 80.0 |
| 9 | 20.0 | 53.0 |
| 10 | 87.0 | 87.0 |

(continued)

| Stanchion ID | Length (nm) | Width (nm) |
|---|---|---|
| 11 | 53.0 | 93.0 |
| 12 | 20.0 | 133.0 |
| 13 | 33.0 | 90.0 |
| 14 | 18.5 | 120.0 |
| 15 | 18.5 | 37.0 |
| 16 | 14.8 | 55.5 |
| 17 | 31.6 | 52.6 |
| 18 | 34.2 | 52.6 |
| 19 | 15.8 | 39.5 |
| 20 | 13.2 | 50.0 |
| 21 | 13.2 | 34.2 |
| 22 | 13.1 | 39.5 |
| 23 | 20.0 | 50.0 |
| 24 | 20.0 | 150.0 |
| 25 | 20.0 | 40.0 |
| 26 | 60.0 | 80.0 |
| 27 | 30.0 | 75.0 |
| 28 | 14.8 | 40.7 |
| 29 | 53.3 | 113.0 |
| 30 | 66.7 | 133.0 |
| **Average =** | 41.0 | 80.1 |

Table 5. Number of Stanchions

| Particles ID | Number of Stanchions |
|---|---|
| 1 | 5 |
| 2 | 3 |
| 3 | 5 |
| 4 | 2 |
| 5 | 4 |
| 6 | 5 |
| 7 | 4 |
| 8 | 3 |
| 9 | 3 |
| 10 | 2 |
| 11 | 3 |
| 12 | 3 |
| 13 | 4 |

(continued)

| Particles ID | Number of Stanchions |
|---|---|
| 14 | 3 |
| 15 | 4 |
| 16 | 3 |
| 17 | 6 |
| 18 | 4 |
| 19 | 5 |
| 20 | 3 |
| 21 | 3 |
| 22 | 2 |
| 23 | 3 |
| 24 | 3 |
| 25 | 4 |
| 26 | 3 |
| 27 | 4 |
| 28 | 4 |
| 29 | 4 |
| 30 | 3 |
| **Average =** | 3.6 |

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

**Claims**

1. A particle composition comprising:

one or more particles comprising a pigment material and a polymeric coating layer at least partially surrounding the pigment particle, wherein the pigment is selected from the group consisting of titanium dioxide, carbon black, mica, silica, calcium carbonate, barium sulfate, zinc oxide, lead oxide, zinc sulfate, iron oxide, talc, clays, kaolinite, montmorillonite, smectite, illite, and chlorite; and
stanchions for particle to particle bridging extending from the coating layer,
wherein the stanchions are made of a polymeric material,
wherein the polymeric material making up the polymeric coating layer of the particles is the same as the polymeric material that makes up the stanchions,
wherein the polymeric material is an addition polymerizable polymer selected from alkyl (meth)acrylate or is selected from the group consisting of emulsion polymers consisting of melamine formaldehyde, urea formaldehyde, alkyl (meth)acrylate, styrene, isocyanate and a polyol,
wherein the stanchions for particle to particle bridging measure a width of less than 2X the radius of a coated particle from which each stanchion extends,
wherein an average number of stanchions is from less than 0.1 to 6 stanchions per coated particle of the particle composition, and
wherein the stanchions for particle to particle bridging on average have a measured length between 10 nm (nanometers) and 500 nm,
wherein the number of stanchions and the stanchion dimensions are determined using the method identified in the description.

2. The particle composition according to claim 1 further comprising discrete particle separators between the particles of pigment material.

3. The particle composition according to claim 2, wherein the polymeric material of the stanchions is from 0.01 to 60 wt % based on weight of the polymeric material.

4. The composition according to claim 1, wherein the particle has a refractive index, and the polymeric material has a refractive index different than the refractive index of the particle.

5. The composition according to claim 1, wherein the pigment material has a brightness value, and the particle composition has a brightness value, as determined by Tappi Test Method T 452 om - 08, that is the same or higher than the brightness of the pigment material.

6. The composition according to claim 1, wherein the polymeric coating

    (a) comprises a material selected from the group consisting of gellable colloid, carboxy methyl cellulose, gelatin, gelatin-gum arabic, melamine formaldehyde, methylol melamine, urea formaldehyde, dimethylol urea, methylated dimethylol urea, methylated melamine formaldehyde, methylated methylol melamine, a gelatin-anionic polymer, alkyl acrylate, alkyl methacrylate, alkylacrylate-acrylic acid copolymer, or reaction product with any of the foregoing; or
    (b) is a reaction product of two wall forming components selected from the group consisting of a diacid and a diol, a diester and a diol, a metal salt of dibasic acid and a dihalide, glycol ester and diacid, diacid chloride and diol, ethylene carbonate and diacid, anhydride and diol, diphenol and diacid, diacetate of diphenol and diacid, alkali metal salt of diphenol and a diacid halogen, a diamine and a dianhydride, or a tetramine and a dianhydride.

7. The composition according to claim 3, wherein the discrete particle separators are made of the polymeric material of the stanchions or coating layer.

8. The composition according to claim 2, wherein the particle separators

    (a) have a particle size range between 1 nm to 2 $\mu$m; or
    (b) have a median particle size from 5 nm to 1500 nm.

9. The composition according to claim 1, wherein a ratio by weight of polymer to pigment material is from 10 to 60 wt %

10. The composition according to claim 1, wherein the particle composition comprises a filler for a paper substrate which at loading levels of up to 35% by weight of the substrate results in an opacity value as determined by Tappi method T 425, for the paper substrate which is equal or greater than a paper substrate filled with two times the equivalent weight of pigment without the polymer coating.

11. The composition to claim 1, wherein the pigment is titanium dioxide.

12. The composition according to claim 1, wherein the particle composition has an oil absorption of from 14 to 30 grams oil per 100 grams of the particle composition.

13. The composition according to claim 1, wherein the particle composition is selected to have a zeta potential from greater than -180 mV (millivolts) to less than +60mV.

14. The composition according to claim 1, wherein the particle composition is cationic.

15. A substrate coated with the composition according to claim 3, wherein

    (a) a ratio by weight of polymeric material to coated particle composition is from 10 wt % to 60 wt %, and the substrate with the particle composition has a gloss value higher than a gloss value of the substrate with uncoated pigment material; or
(b) a ratio by weight of polymeric material to coated particle composition is from 10 wt % to less than 60 wt %, and the particle composition has a density value at least 32% lower than a density value of the pigment particle.

16. The composition according to claim 1, wherein the particle composition has a density of less than a density of the pigment material when uncoated.

17. A paper having a coating, wherein the coating comprises a composition according to any preceding claim.

18. The use of the composition according to any preceding claim in a coating for paper.

**Patentansprüche**

1. Partikelzusammensetzung umfassend:

ein oder mehrere Partikel, die ein Pigmentmaterial und eine Polymerbeschichtungsschicht, die das Pigmentpartikel wenigstens teilweise umgibt, umfasst, wobei das Pigment ausgewählt ist aus der Gruppe bestehend aus Titandioxid, Ruß, Glimmer, Siliciumdioxid, Calciumcarbonat, Bariumsulfat, Zinkoxid, Bleioxid, Zinksulfat, Eisenoxid, Talkum, Tonen, Kaolinit, Montmorillonit, Smektit, Illit und Chlorit; und
Streben zur Verbrückung von Partikel zu Partikel, die von der Beschichtungsschicht vorragen,
wobei die Streben aus einem Polymermaterial gebildet sind,
wobei das Polymermaterial, das die Polymerbeschichtungsschicht der Partikel bildet, das gleiche wie das Polymermaterial, das die Streben bildet, ist,
wobei das Polymermaterial ein additionspolymerisierbares Polymer ausgewählt aus Alkyl(meth)acrylat ist oder ausgewählt ist aus der Gruppe bestehend aus Emulsionspolymeren, die aus Melaminformaldehyd, Harnstoffformaldehyd, Alkyl(meth)acrylat, Styrol, Isocyanat und einem Polyol bestehen,
wobei die Streben zur Verbrückung von Partikel zu Partikel eine Breite von weniger als 2X dem Radius eines beschichteten Partikels, von dem jede Streben vorragt, aufweisen,
wobei eine mittlere Anzahl von Streben von kleiner als 0,1 bis 6 Streben pro beschichtetem Partikel der Partikelzusammensetzung beträgt und
wobei die Streben zur Verbrückung von Partikel zu Partikel im Mittel eine gemessene Länge zwischen 10 nm (Nanometer) und 500 nm aufweisen,
wobei die Anzahl von Streben und die Strebenabmessungen unter Verwendung des in der Beschreibung beschriebenen Verfahrens bestimmt werden.

2. Partikelzusammensetzung gemäß Anspruch 1, ferner umfassend diskrete Partikeltrennelemente zwischen den Partikeln von Pigmentmaterial.

3. Partikelzusammensetzung gemäß Anspruch 2, wobei das Polymermaterial der Streben von 0,01 bis 60 Gew.-%, bezogen auf das Gewicht des Polymermaterials, ist.

4. Zusammensetzung gemäß Anspruch 1, wobei das Partikel einen Brechungsindex aufweist und das Polymermaterial einen Brechungsindex aufweist, der von dem Brechungsindex des Partikels verschieden ist.

5. Zusammensetzung gemäß Anspruch 1, wobei das Pigmentmaterial einen Helligkeitswert aufweist und die Partikelzusammensetzung einen Helligkeitswert aufweist, wie bestimmt durch das Tappi-Prüfverfahren T 452 om - 08, der gleich der oder höher als die Helligkeit des Pigmentmaterials ist.

6. Zusammensetzung gemäß Anspruch 1, wobei die Polymerbeschichtung

(a) ein Material ausgewählt aus der Gruppe bestehend aus gelierbarem Kolloid, Carboxymethylcellulose, Gelatine, Gelatine-Gummiarabicum, Melaminformaldehyd, Methylolmelamin, Harnstoffformaldehyd, Dimethylolharnstoff, methyliertem Dimethylolharnstoff, methyliertem Melaminformaldehyd, methyliertem Methylolmelamin, einem anionischen Gelatinepolymer, Alkylacrylat, Alkylmethacrylat, Alkylacrylat-AcrylsäureCopolymer, oder ein Reaktionsprodukt mit einem der Genannten umfasst; oder
(b) ein Reaktionsprodukt von zwei wandbildenden Komponenten ausgewählt aus der Gruppe bestehend aus einer Disäure und einem Diol, einem Diester und einem Diol, einem Metallsalz einer zweibasigen Säure und einem Dihalogenid, Glycolester und Disäure, Disäurechlorid und Diol, Ethylencarbonat und Disäure, Anhydrid und Diol, Diphenol und Disäure, Diacetat von Diphenol und Disäure, Alkalimetallsalz von Diphenol und einem Disäurehalogen, einem Diamin und einem Dianhydrid oder einem Tetramin und einem Dianhydrid ist.

**7.** Zusammensetzung gemäß Anspruch 3, wobei die diskreten Partikeltrennelemente aus dem Polymermaterial der Streben oder der Beschichtungsschicht gebildet sind.

**8.** Zusammensetzung gemäß Anspruch 2, wobei die Partikeltrennelemente

(a) einen Partikelgrößenbereich zwischen 1 nm und 2 $\mu$m aufweisen; oder
(b) eine mediane Partikelgröße von 5 nm bis 1500 nm aufweisen.

**9.** Zusammensetzung gemäß Anspruch 1, wobei ein Gewichtsverhältnis von Polymer zu Pigmentmaterial von 10 bis 60 Gew.-% beträgt.

**10.** Zusammensetzung gemäß Anspruch 1, wobei die Partikelzusammensetzung einen Füllstoff für ein Papiersubstrat umfasst, wobei Beladungsniveaus von bis zu 35 Gew.-% des Substrats einen Opazitätswert, wie bestimmt durch das Tappi-Verfahren T 425, für das Papiersubstrat ergibt, der gleich wie oder größer als für ein Papiersubstrat ist, das mit zweimal dem äquivalenten Gewicht von Pigment ohne die Polymerbeschichtung gefüllt ist.

**11.** Zusammensetzung gemäß Anspruch 1, wobei das Pigment Titandioxid ist.

**12.** Zusammensetzung gemäß Anspruch 1, wobei die Partikelzusammensetzung eine Ölabsorption von 14 bis 30 Gramm Öl pro 100 Gramm der Partikelzusammensetzung aufweist.

**13.** Zusammensetzung gemäß Anspruch 1, wobei die Partikelzusammensetzung so ausgewählt ist, dass sie ein Zeta-Potential von größer als -180 mV (Millivolt) bis kleiner als +60 mV aufweist.

**14.** Zusammensetzung gemäß Anspruch 1, wobei die Partikelzusammensetzung kationisch ist.

**15.** Substrat, beschichtet mit der Zusammensetzung gemäß Anspruch 3, wobei

(a) ein Gewichtsverhältnis von Polymermaterial zu beschichteter Partikelzusammensetzung von 10 Gew.-% bis 60 Gew.-% beträgt und das Substrat mit der Partikelzusammensetzung einen Glanzwert höher als ein Glanzwert des Substrat mit unbeschichtetem Pigmentmaterial aufweist; oder
(b) ein Gewichtsverhältnis von Polymermaterial zu beschichteter Partikelzusammensetzung von 10 Gew.-% bis weniger als 60 Gew.-% beträgt und die Partikelzusammensetzung einen Dichtewert von wenigstens 32 % niedriger als ein Dichtewert der Pigmentpartikel aufweist.

**16.** Zusammensetzung gemäß Anspruch 1, wobei die Partikelzusammensetzung eine Dichte von kleiner als eine Dichte des Pigmentmaterials, wenn unbeschichtet, aufweist.

**17.** Papier mit einer Beschichtung, wobei die Beschichtung eine Zusammensetzung gemäß einem der vorstehenden Ansprüche umfasst.

**18.** Verwendung der Zusammensetzung gemäß einem der vorstehenden Ansprüche in einer Beschichtung für Papier.

**Revendications**

**1.** Composition de particules comprenant :

une ou plusieurs particules comprenant un matériau de pigment et une couche de revêtement polymérique entourant au moins partiellement la particule de pigment, dans laquelle le pigment est sélectionné dans le groupe constitué par le dioxyde de titane, le noir de carbone, le mica, la silice, le carbonate de calcium, le sulfate de baryum, l'oxyde de zinc, l'oxyde de plomb, le sulfate de zinc, l'oxyde de fer, le talc, les argiles, la kaolinite, la montmorillonite, la smectite, l'illite et la chlorite ; et
des montants pour un pontage de particule à particule s'étendant depuis la couche de revêtement,

dans laquelle les montants sont composés d'un matériau polymérique,

dans laquelle le matériau polymérique qui compose la couche de revêtement polymérique des particules est le même que le matériau polymérique qui compose les montants,

dans laquelle le matériau polymérique est un polymère polymérisable par addition sélectionné parmi un (méth)acrylate d'alkyle ou est choisi dans le groupe constitué par des polymères en émulsion constitués de mélamine formaldéhyde, d'urée formaldéhyde, de (méth)acrylate d'alkyle, de styrène, d'isocyanate et d'un polyol,

dans laquelle les montants pour le pontage de particule à particule mesurent une largeur inférieure à 2X le rayon d'une particule revêtue à partir de laquelle chaque montant s'étend,

dans laquelle un nombre moyen de montants est de moins de 0,1 à 6 montants par particule revêtue de la composition de particules, et

dans laquelle les montants pour le pontage de particule à particule en moyenne ont une longueur mesurée comprise entre 10 nm (nanomètres) et 500 nm,

dans laquelle le nombre de montants et les dimensions des montants sont déterminés en utilisant le procédé identifié dans la description.

2. Composition de particules selon la revendication 1 comprenant en outre des séparateurs de particules discrets entre les particules de matériau de pigment.

3. Composition de particules selon la revendication 2, dans laquelle le matériau polymérique des montants est de 0,01 à 60 % en poids sur la base du poids du matériau polymérique.

4. Composition selon la revendication 1, dans laquelle la particule a un indice de réfraction, et le matériau polymérisé a un indice de réfraction différent de l'indice de réfraction de la particule.

5. Composition selon la revendication 1, dans laquelle le matériau de pigment a une valeur de luminosité, et la composition de particules a une valeur de luminosité, telle que déterminée par le procédé de test Tappi T 452 om - 08, qui est égale ou supérieure à la luminosité du matériau de pigment.

6. Composition selon la revendication 1, dans laquelle le revêtement polymérique

(a) comprend un matériau sélectionné dans le groupe constitué par un colloïde gélifiable, une carboxyméthylcellulose, une gélatine, une gélatine-gomme arabique, un mélamine formaldéhyde, du méthylol mélamine, de l'urée formaldéhyde, du diméthylol urée, du diméthylol méthylé urée, du mélamine méthylée formaldéhyde, du méthylol méthylé mélamine, une gélatine-polymère anionique, un acrylate d'alkyle, un méthacrylamide alkyle, un copolymère d'acrylate d'alkyle-acide acrylique, ou un produit de réaction avec l'un quelconque des précédents ; ou

(b) est un produit de réaction de deux composants de formation de paroi sélectionnés dans le groupe constitué par un diacide et un diol, un diester et un diol, un sel métallique d'acide dibasique et un dihalogénure, un ester de glycol et un diacide, un chlorure de diacide et un diol, un carbonate d'éthylène et un diacide, un anhydride et un diol, un diphénol et un diacide, un diacétate de diphénol et un diacide, un sel de métal alcalin de diphénol et un halogénure de diacide, une diamine et un dianhydride, ou une tétramine et un dianhydride.

7. Composition selon la revendication 3, dans laquelle les séparateurs de particules discrets sont composés du matériau polymérique des montants ou de la couche de revêtement.

8. Composition selon la revendication 2, dans laquelle les séparateurs de particules

(a) ont une plage de tailles de particules comprise entre 1 nm et 2 $\mu$m ; ou

(b) ont une taille médiane de particule de 5 nm à 1 500 nm.

9. Composition selon la revendication 1, dans laquelle un rapport en poids de polymère sur matériau de pigment est de 10 à 60 % en poids.

10. Composition selon la revendication 1, dans laquelle la composition de particules comprend une charge pour un substrat de papier qui, à des niveaux de chargement allant jusqu'à 35 % en poids du substrat, entraîne une valeur d'opacité comme déterminée par le procédé Tappi T 425, pour le substrat de papier qui est supérieure ou égale à un substrat de papier rempli avec deux fois le poids équivalent de pigment sans le revêtement de polymère.

**11.** Composition selon la revendication 1, dans laquelle le pigment est le dioxyde de titane.

**12.** Composition selon la revendication 1, dans laquelle la composition de particules a une absorption d'huile de 14 à 30 grammes d'huile par 100 grammes de composition de particules.

**13.** Composition selon la revendication 1, dans laquelle la composition de particules est sélectionnée pour avoir un potentiel zêta allant de plus de -180 mV (millivolts) à moins de +60 mV.

**14.** Composition selon la revendication 1, dans laquelle la composition de particules est cationique.

**15.** Substrat revêtu par la composition selon la revendication 3, dans lequel

(a) un rapport en poids du matériau polymérique sur la composition de particules revêtues est de 10 % en poids à 60 % en poids, et le substrat comportant la composition de particules a une valeur de brillance supérieure à une valeur de brillance du substrat comportant un matériau de pigment non revêtu ; ou
(b) un rapport en poids du matériau polymérique sur la composition de particules revêtues est de 10 % en poids à moins de 60 % en poids, et la composition de particules a une valeur de densité au moins 32 % plus faible qu'une valeur de densité de la particule de pigment.

**16.** Composition selon la revendication 1, dans laquelle la composition de particules a une densité inférieure à une densité du matériau de pigment lorsqu'il n'est pas revêtu.

**17.** Papier ayant un revêtement, dans lequel le revêtement comprend une composition selon une quelconque revendication précédente.

**18.** Utilisation de la composition selon une quelconque revendication précédente dans un revêtement pour papier.

FIG.1

EP 3 010 982 B1

FIG.2

FIG.3

FIG.4

FIG.5

FIG.6

FIG.7

FIG.8

FIG.9

FIG.10

FIG.11

FIG.12

0.2 µm

FIG.13

| HV | det | HFW | WD | 400 nm |
| 1.00 kV | TLD | 802 nm | 2.1 mm | |

FIG.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9312183 A1
- EP 2161304 A1
- EP 2343344 A1
- US 6080802 A
- US 4981882 A
- US 8067089 B